# EUROPÄISCHE PATENTSCHRIFT

(11) **EP 2 861 435 B1**
(45) Veröffentlichungstag und Bekanntmachung des Hinweises auf die Patenterteilung: **12.02.2020**
(21) Anmeldenummer: 13729353.6
(22) Anmeldetag: 17.06.2013
(51) Int. Cl.: B60C 29/04, B29D 23/24, B29K 75/00, B60C 29/00, B29K 705/00

(54) **VENTIL FÜR EINEN AUFBLASBAREN SCHLAUCHABSCHNITT**
VALVE, TUBE SECTION WITH A VALVE AND PRODUCTION THEREOF
VALVE, SECTION DE TUBE AVEC UNE VALVE ET PROCEDURE DE PRODUCTION DE CEUX-CI

(30) Priorität: 18.06.2012 EP 12172320
(43) Veröffentlichungstag der Anmeldung: 22.04.2015
(73) Patentinhaber: BASF SE, 67056 Ludwigshafen am Rhein (DE)
(72) Erfinder: MATTFELD, Sascha, 49448 Brockum (DE); SCHOLZ, Günter, 49448 Lemförde (DE); BILGES, Guido, 32351 Stemwede-Oppendorf (DE); KOHAKE, Hendrik, 49393 Lohne (DE)
(74) Vertreter: BASF IP Association
(86) Internationale Anmeldenummer: PCT/EP2013/062528
(87) Internationale Veröffentlichungsnummer: WO 2013/189890

(56) Entgegenhaltungen:
- WO-A1-96/18513
- CN-C- 100 423 663
- DE-A1- 10 050 099
- US-A1- 2005 046 182
- RTI Sports GmbH, Urmitz: "Benutzerhinweise Ergon BH200 und BH300 Trinksysteme", ergon international rti sports , 22. Januar 2010 (2010-01-22), XP002713049, Gefunden im Internet: URL:www.ergon-bike.com/de/de/files/files/v iew/911/ERG_Hydrpck_Anleitung.pdf [gefunden am 2013-09-16]

## Beschreibung

Die vorliegende Erfindung betrifft einen aufblasbaren Schlauchabschnitt, der aus einem thermoplastischen Polyurethan gefertigt ist und mit einem Ventil verbunden ist umfassend einen rohrförmigen Schaft sowie einen Ventilfuß. Weiterhin umfasst die Erfindung Verfahren zur Herstellung des Schlauchabschnitts.

Schläuche für Fahrzeugreifen, beispielsweise Fahrradreifen, werden üblicherweise auf Basis von Kautschuk gefertigt. Daneben sind Schläuche bekannt, die aus thermoplastischen Kunststoffen hergestellt sind, beispielsweise aus thermoplastischem Polyurethan. Letztere zeichnen sich dadurch aus, dass sie gegenüber Schläuchen auf Kautschuk-Basis höher belastbar sind und deutlich weniger Gewicht aufweisen. Allerdings sind sie derzeit in der Herstellung noch erheblich teurer als Schläuche auf Kautschuk-Basis.

In der Offenlegungsschrift DE 10 2009 007 163 A1 wird ein Schlauchsystem beschrieben mit einem zu einem Ring geformten Schlauch sowie einem Ventil, das in ein Loch im Schlauch eingesetzt ist. Schlauch und Ventil sind dadurch verbunden, dass die das Loch umgebende Schlauchwand zwischen dem Ende des Ventils und einer auf dem Ventil angeordneten Anpresshülse eingeklemmt ist.

Neben torusförmigen Schläuchen sind auch an beiden Enden verschlossene Schlauchabschnitte zum Einsatz in Luftreifen bekannt. So offenbart das Dokument EP 0 090 221 A1 ein Schlauchstück aus einem thermoplastischen Elastomer, das anstelle eines herkömmlichen Schlauches in einem Fahrzeugreifen einsetzbar ist. Zur Befestigung des Ventils an dem Schlauchstück wird vorgeschlagen, den Ventilschaft von innen durch ein Loch in der Schlauchwand zu stecken und mittels eines Lösungsmittels zu verkleben. Alternativ kann das Ventil ohne Verklebung mit Hilfe zweier Gummischeiben und einer Schraubmutter an der Schlauchwand befestigt werden.

Eine weitere Möglichkeit, ein Ventil an einem Schlauchabschnitt zu befestigen, beschreibt die Offenlegungsschritt DE 36 24 503 A1. Das Ventil umfasst einen Schaft und einen Tellerfuß, der aus einem gummiartigen Kunststoff gefertigt ist. Der Schaft besteht aus einem Kunststoff mit einer deutlich höheren Werkstoffhärte als der Fuß und ist mit dem Fuß molekular verbunden. Der Fuß kann während der Herstellung des Schlauches gefertigt werden und integral mit diesem verbunden sein.

DE 100 50 099 A1 offenbart eine Konduit-Herzklappenprothese, bestehend aus einem zylindrischen oder mit bulbenförmigen Ausbuchtungen versehenen Schlauch mit einem integrierten Stützgehäuse mit einem Basisring, der mindestens zwei im wesentlichen in Ringachsrichtung weisende, über eine bogenförmige, der Befestigung flexibler Segel dienende Wandung verbundene Pfosten träg.

CN 100423663 C offenbart den Aufbau einer Schuhsohle, insbesondere eine besondere Ausgestaltung des Fersenteils.

WO 96/18513 A1 offenbart ein pneumatisches Inline-Skate-Rad, das aus einer steifen Urethannabe und einem die Nabe umschließenden Reifenkörper, der aus weicherem Urethan gebildet ist, besteht.

In den "Benutzerhinweise Ergon BH200 und BH300 Trinksysteme" der RTI Sports GmbH, Urmitz, wird ein Trinksystem bestehend aus einem Polyurethan offenbart sowie einen Schlauch, der von der Trinkblase abzukoppeln ist.

US2005/046182A1 offenbart eine Anordnung, um einen aufblasbaren Gegenstand, wie beispielsweise ein aufblasbares Kleidungsstück oder eine Luftmatratze, mit einer Luft-Quelle zu verbinden. Die Anordnung umfasst ein halbstarres, hohles Gehäuse mit einem ersten, im Allgemeinen rohrförmigen, einführbaren Abschnitt, der durch eine Öffnung in einer flexiblen Wand des aufblasbaren Artikels einführbar ist. Ein zweiter äußerer Abschnitt erstreckt sich entgegengesetzt von dem einführbaren Abschnitt und nach außen, wobei der äußere Abschnitt und der einführbare Abschnitt, miteinander verbunden sein können.

Den bekannten Schläuchen ist gemein, dass die Befestigung des Ventils an der Schlauchwand aufwändig und störungsanfällig ist, beispielsweise im Hinblick auf die Möglichkeit des Ausreißens des Ventils bei den geklemmten Varianten.

Es stellte sich die Aufgabe, ein Ventil für einen Schlauchabschnitt bereit zu stellen, das einfach und sicher an einem Schlauchabschnitt befestigt werden kann. Ferner stellte sich die Aufgabe, einen Schlauchabschnitt mit einem entsprechenden Ventil bereit zu stellen.

Diese Aufgabe wird durch den Gegenstand der Erfindung gelöst, wie er in Anspruch 1 wiedergegeben ist. Verfahren zur Herstellung der erfindungsgemäßen Gegenstände sind in den Ansprüchen 9 und 12 angegeben. Weitere vorteilhafte Ausführungsformen der Erfindung finden sich in den jeweils abhängigen Ansprüchen.

Die vorliegende Erfindung betrifft einen aufblasbaren Schlauchabschnitt, der aus einem thermoplastischen Polyurethan gefertigt ist,

wobei der Schlauchabschnitt ein Loch aufweist und um dieses Loch herum haftend und vollumfänglich mit dem Ventilfuß (20) eines Ventils verbunden ist, wobei der Innenraum des Schlauches mit dem Innenraum des Schaftes (10) gegenüber der Umgebung abgedichtet verbunden ist,

wobei das Ventil einen rohrförmigen Schaft (10) sowie einen Ventilfuß (20) umfasst, der haftend und vollumfänglich mit einem Ende des Schaftes (10) verbunden ist,
dadurch gekennzeichnet, dass der Ventilfuß (20) aus einem thermoplastischen Polyurethan gefertigt ist,
dass der Schaft (10) des Ventils aus einem thermoplastischen Kunststoff gefertigt ist, und
dass der Schlauchabschnitt für die Herstellung von Innenschläuchen geeignet ist, und
dass der Schlauchabschnitt für die Herstellung von Innenschläuchen von Fahrzeugen geeignet ist.

Das Ventil ist geeignet, an einem aufblasbaren Schlauchabschnitt angebracht zu werden. Bei diesem Schlauchabschnitt kann es sich um einen geschlossen ringförmigen Schlauch oder um einen an beiden Enden verschlossenen Schlauchabschnitt handeln. Erfindungsgemäß umfasst das Ventil einen rohrförmigen Schaft sowie einen Ventilfuß, der aus einem thermoplastischen Polyurethan gefertigt ist. Der Ventilfuß ist haftend und vollumfänglich mit einem Ende des Schaftes verbunden.

Unter dem Begriff "vollumfänglich" wird dabei verstanden, dass ein Ende des Schaftes über seinen gesamten Umfang von dem Ventilfuß ohne Lücken vollständig umfasst ist. Eine "haftende Verbindung" bedeutet, dass aufgrund von physikalischen und/oder chemischen Wechselwirkungen zwischen der Oberfläche des Schaftes und dem Material des Ventilfußes eine Verbindung zwischen den Bauteilen entsteht, die über einen reinen Formschluss hinausgeht.

Das Ventil ist geeignet für mit einem Gas, insbesondere Luft, gefüllte Schläuche oder Schlauchabschnitte, wie sie beispielsweise von Fahrrädern, Handkarren, Motorfahrzeugen oder Anhängern bekannt sind. Die Dimensionen von Ventilschaft und Ventileinbauten entsprechen vorzugsweise denen von bekannten Ventilen, beispielsweise im Hinblick auf die Länge und den Durchmesser des Schaftes.

Erfindungsgemäß ist der Schaft aus einem thermoplastischen Kunststoff gefertigt. Die meist zylindrische oder abschnittsweise zylindrische Form des Schaftes lässt sich beispielsweise durch Spritzguss oder Extrusion herstellen. Die üblicherweise erforderlichen Innen- und/oder Außengewinde zur Anbringung der weiteren Ventilbauteile können bereits beim Herstellungsprozess oder nachträglich erzeugt werden, z.B. durch bekannte Methoden des Drehens oder Gewindeschneidens.

Vorzugsweise besitzt der zur Herstellung des Schaftes verwendete thermoplastische Kunststoff eine Zähigkeit und Duktilität, die gewährleistet, dass der Schaft bei tiefen Temperaturen nicht bricht. Geeignete thermoplastische Kunststoffe sind beispielsweise zähe oder zähmodifizierte Typen aus den Gruppen der Styrole, Styrolcopolymere, Polyamide, Polyester, Polyether wie Polyoxymethylen, Polyolefine und Polyurethane. Besonders bevorzugt ist ein thermoplastischer Kunststoff, der für Temperaturen bis minus 30°C geeignet ist. Gegenüber einem Aluminium-Schaft zeichnet sich ein Schaft, der aus einem thermoplastischen Kunststoff hergestellt ist, durch einen deutlich geringeren für die Herstellung erforderlichen Energieaufwand und eine kürzere Fertigungsdauer aus.

Ein besonders bevorzugter Werkstoff ist thermoplastisches Polyurethan (TPU), das im ausgehärteten Zustand über die für den Einsatz als Ventilschaft notwendige Festigkeit und über eine Elastizität verfügt, die es erlaubt, den Schaft zu verbiegen, ohne dass er bricht. Ein derartiges Ventil bietet Vorteile hinsichtlich einer Vielfalt an Konstruktionsvarianten sowie in der Zugänglichkeit und Handhabung, z.B. beim Aufpumpen eines Reifens.

Geeignete thermoplastische Polyurethane sind beispielsweise solche auf Basis von Polyestern oder Polyethern.

Gemäß einer Ausführungsform weist das thermoplastische Polyurethan vorzugsweise eine Shore Härte im Bereich von 70A bis 95D auf, weiter bevorzugt im Bereich von 90A bis 90D und besonders bevorzugt im Bereich von 98A bis 85D.

Gemäß einer weiteren Ausführungsform der vorliegenden Erfindung hat das vorzugsweise eingestzte thermoplastische Polyurethan eine geringere Härte, so dass der Ventilschaft flexibel ist. Dies ermöglicht für einige Anwendungen eine bessere Erreichbarkeit des Ventils.

Thermoplastische Polyurethane sind hinlänglich bekannt. Die Herstellung erfolgt durch Umsetzung von (a) Isocyanaten mit (b) gegenüber Isocyanaten reaktiven Verbindungen mit einem zahlenmittleren Molekulargewicht von 0,5 x 10³ g/mol bis 100 x 10³ g/mol und gegebenenfalls (c) Kettenverlängerungsmitteln mit einem Molekulargewicht von 0,05 x 10³g/mol bis 0,499 x 10³ g/mol gegebenenfalls in Gegenwart von (d) Katalysatoren und/oder (e) üblichen Hilfsstoffen und/oder Zusatzstoffen.

Die Komponenten (a) Isocyanat, (b) gegenüber Isocyanaten reaktive Verbindungen, (c) Kettenverlängerungsmittel werden einzeln oder zusammen auch als Aufbaukomponenten bezeichnet.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Weitere geeignete aliphatische Isocyanate sind beispielsweise Hexamethylendiisocyanat (HDI), oder 1-Isocyanato-4-[(4-isocyanatocyclohexyl) methyl]cyclohexan (H12MDI). Besonders bevorzugt wird 4,4'-MDI eingesetzt.

Als gegenüber Isocyanaten reaktive Verbindungen (b) werden bevorzugt Polyesterole oder Polyetherole verwendet, die üblicherweise auch unter dem Begriff "Polyole" zusammengefasst werden. Die zahlenmittleren Molekulargewichte dieser Polyole liegen zwischen 0,5 x 10³ g/mol und 8 x 10³ g/mol, bevorzugt zwischen 0,6 x 10³ g/mol und 5 x 10³ g/mol, insbesondere zwischen 0,8 x 10³ g/mol und 3 x 10³ g/mol. Bevorzugt haben die Polyole eine mittlerer Funktionalität zwischen 1,8 und 2,3, bevorzugt zwischen 1,9 und 2,2, insbesondere 2. Bevorzugt weisen die Polyole (b) nur primäre Hydroxylgruppen auf. Das zahlenmittlere Molekulargewicht wird nach DIN 55672-1 bestimmt.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerungsmittel eingesetzt werden können. Bevorzugt haben die Verbindungen (c) nur primäre Hydroxylgruppen.

Katalysatoren (d), welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer weiteren bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat. Die Katalysatoren (d) werden bevorzugt in Mengen von 0,0001 bis 0,1 Gew.-Teilen pro 100 Gew.-Teile der mit Isocyanaten reakiven Verbindung (b) eingesetzt. Bevorzugt werden Zinnkatalysatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Als Hydrolyseschutzmittel werden bevorzugt Oligomere und/oder polymere aliphatische oder aromatische Carbodiimide verwendet. Um die erfindungsgemäßen TPU gegen Alterung zu stabilisieren, können dem TPU bevorzugt Stabilisatoren zugegeben werden. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S. 98-136.

Grundsätzlich ist jedes thermoplastische Polyurethan für die Herstellung des Ventilschaftes geeignet. Zur Einstellung von Härte werden die Aufbaukomponenten (a) bis (c) verwendet, wobei das Verhältnis (a)+(c) zu (b) den Grad der Härte bestimmt. Der Schmelzindex der TPU kann durch die eingesetzten Mengen der Aufbaukomponenten (b) und (c) in relativ breiten molaren Verhältnissen variiert werden, wobei die Schmelzviskosität mit zunehmendem Gehalt an Kettenverlängerungsmittel (c) ansteigt, während der Schmelzindex abnimmt. Bevorzugt weisen entsprechende TPU eine Shore-Härte zwischen 30 A und 100 D, bevorzugt zwischen 50 A und 80 D und besonders bevorzugt zwischen 60 A und 75 D auf.

Weitere allgemeine Hinweise zum Herstellen von thermoplastischen Polyurethanen sind u.a. folgendem Standardwerk zu entnehmen: Polyurethane Handbook, Edited by Günter Oertel, 2nd Edition, Hanser Publisher, Munich, pp. 421 - 433. Gezielte Verfahren für leicht bis hoch kristalline TPU sind der EP 0 922 552 A1 und für transparente Erscheinung der EP 1 846 465 A1 zu entnehmen. Besonders transparente TPU können beispielsweise der WO 2010/076224 A1 und WO 2007/118827 A1 entnommen werden, deren Inhalt hiermit in diese Anmeldung aufgenommen wird.

Die Herstellung eines Ventilschaftes aus thermoplastischem Polyurethan kann beispielsweise erfolgen durch Spritzguss, Extrusion und/oder Sinterverfahren. Bevorzugt ist die Herstellung mittels Spritzguss- oder Extrusionsverfahren. Erfindungsgemäß ist es möglich, dass nach der Herstellung des Ventilschafts ein Gewinde in den Ventilschaft geschnitten wird, um einen Verschluss anbringen zu können. Ebenso ist es möglich, dass das Gewinde bei der Herstellung erzeugt wird, beispielsweise bei einer Herstellung des Ventilschafts mittels Spritzgussverfahren.

In bevorzugten Ausgestaltungen der Erfindung umschließt der Ventilfuß den Schaft in axialer Richtung mindestens 3 mm, besonders bevorzugt mindestens 5 mm. Zur weiteren Verbesserung der Verbindung zwischen Ventilfuß und Schaft ist vorzugsweise in dem Abschnitt des Schaftes, der mit dem Ventilfuß verbunden ist, eine Nut vorhanden, die sich von der äußeren Mantelfläche nach innen erstreckt. Nach der Anbringung des Ventilfußes an dem Schaft ist diese Nut von dem Material des Ventilfußes ausgefüllt, sodass sich ein zusätzlicher Formschluss zwischen Ventilfuß und Schaft ergibt. Die Tiefe der Nut von der Mantelfläche nach innen gemessen sowie ihre Form werden vorzugsweise so gewählt, dass einerseits das Material des Ventilfußes die Nut vollständig ausfüllt, andererseits die Materialstärke des Ventilfußes an dieser noch eine ausreichende Festigkeit aufweist. Eine Tiefe von 0,1 bis 0,7 mm, insbesondere von 0,3 bis 0,5 mm hat sich als guter Kompromiss zwischen diesen Anforderungen erwiesen.

Weiterhin ist in bevorzugten Ausgestaltungen der Erfindung der Ventilfuß so dimensioniert, dass der Ventilfuß am Ende des Schaftes in jede radiale Richtung mindestens so weit über den äußeren Rand des Schaftes hinaus ragt, wie es der Hälfte des Durchmessers des Schaftes an seinem unteren Ende entspricht. Besonders bevorzugt ragt der Ventilfuß am Ende des Schaftes in jede radiale Richtung mindestens so weit über den äußeren Rand des Schaftes hinaus, wie es dem Durchmesser des Schaftes an seinem unteren Ende entspricht. Beträgt der Durchmesser des Schaftes an seinem unteren Ende beispielsweise 5 mm, so ragt der Ventilfuß am Ende des Schaftes in jede radiale Richtung bevorzugt mindestens 2,5 mm, besonders bevorzugt mindestens 5 mm über den äußeren Rand des Schaftes hinaus. Der Außendurchmesser des Ventilfußes beträgt in diesem Beispiel also bevorzugt mindestens 10 mm, besonders bevorzugt mindestens 15 mm.

Die Bezeichnungen "axiale Richtung" und "radiale Richtung" beziehen sich auf die Achse des Schaftes, der üblicherweise eine zylindrische Form hat. Die Mindestmaße in axialer und radialer Richtung gewährleisten, dass nach der Befestigung des Schaftes an einem Schlauchabschnitt der Schaft sicher mit dem Schlauchabschnitt verbunden ist und keine Undichtigkeit entsteht, durch die beispielsweise Luft aus dem Schlauchinneren in die Umgebung entweichen könnte.

Die Auflagefläche des Ventilfußes, die zur Befestigung auf einem Schlauchabschnitt vorgesehen ist, kann unterschiedliche Formen aufweisen. In einer Ausführungsform ist sie kreisrund, sodass der Überstand des Ventilfußes über den äußeren Rand des Schaftes an seinem unteren Ende in jede radiale Richtung identisch ist. In einer weiteren Ausführungsform ist die Auflagefläche oval, wobei sich die obigen Mindestmaße für den Überstand auf die Querachse beziehen. Als Querachse wird die kürzere Achse des Ovals bezeichnet, die längere Achse wird als Längsachse bezeichnet. Die Ausdehnung der Auflagefläche des Ventilfußes in der Längsachse beträgt vorzugsweise das 1,5- bis 3-fache ihrer Ausdehnung in der Querachse.

Auf einem Schlauchabschnitt wird ein Ventilfuß mit einer ovalen Auflagefläche vorzugsweise derart befestigt, dass die Längsachse in Längsrichtung des Schlauchabschnittes zeigt. Die Längsrichtung des Schlauchabschnittes entspricht der Laufrichtung des Reifens, in den der Schlauchabschnitt eingesetzt werden kann.

Weiterhin hat es sich als vorteilhaft herausgestellt, als Material zur Herstellung des Ventilfußes ein thermoplastisches Polyurethan zu wählen, dessen mechanische Eigenschaften wie Elastizität und Dehnung denen des Schlauchmaterials entsprechen. Besonders vorteilhaft wird der Ventilfuß aus demselben Material hergestellt wie der Schlauchabschnitt, auf dem der Ventilfuß befestigt werden soll. Bei einer entsprechenden Materialwahl wird die Wahrscheinlichkeit, dass sich beim Aufpumpen oder durch die Belastungen beim Betrieb des Schlauchabschnitts Spannungsrisse oder Ablösungen aufgrund unterschiedlicher Materialeigenschaften ergeben, deutlich reduziert.

Die Ausgangsmaterialien und Herstellungsverfahren für den Ventilfuß aus thermoplastischem Polyurethan entsprechen den oben ausgeführten Materialien für die Herstellung eines Ventilschaftes aus thermoplastischem Polyurethan.

Bevorzugt wird für den Ventilfuß ein thermoplastisches Polyurethan mit einer Shore-Härte von 40 A bis 70 D, bevorzugt von 50 A bis 50 D, weiter bevorzugt von 70 A bis 90 A verwendet. Neben den genannten Additiven ist es für die Verarbeitung von TPU förderlich, Gleitmittel einzusetzen. Diese rekrutieren sich aus den Stoffgruppen der Fettsäureamide, der Montansäureester, Glyzerinderivate und Polyolefinen sowie Kombinationen daraus. Die einzelnen Verbindungen sind der EP 1 826 225 A2 und der dort zitierten Literatur zu entnehmen. Für das erfindungsgemäße Verfahren ist ein möglichst geringer Anteil an Verarbeitungshilfsmitteln zu wählen, um eine bestmögliche Haftung des Ventilschaftes an den Fahrradschlauch zu gewährleisten. Gemessen an der gesamten Rezeptur ist ein Gleitmittel-Anteil von 0,001 bis 2 Gew.-%, bevorzugt von 0,01 bis 1 Gew.-% und besonders bevorzugt von 0,05 bis 0,5 Gew.-% zu wählen.

Ein bevorzugtes Verfahren zur Herstellung eines derartigen Ventils sieht vor, den Schaft in eine Gießform einzulegen und den Ventilfuß während des Umgießens des Schaftes in der Gießform herzustellen. Bei einem Schaft aus thermoplastischem Polyurethan ist in aller Regel keine Vorbehandlung erforderlich, da sich das Material, aus dem der Ventilfuß hergestellt wird, gut haftend mit dem Schaftmaterial verbindet.

Beispielsweise wird der Ventilfuß in einem Spritzgussprozess unter Druck hergestellt. Der Schaft wird in die Gießform eingelegt, die Form geschlossen und das thermoplastische Polyurethan als Schmelze an einen unteren Abschnitt des Schaftes angespritzt. Nach dem Aushärten der Kunststoffmasse wird das fertige Ventil als Verbundbauteil aus der Gießform entnommen. Die Polyurethanschmelze wird vorzugsweise bei einer Temperatur von 150°C bis 250°C und einem Druck in der Gießform von 100 bis 400 bar verarbeitet.

Es ist auch möglich, dass der Ventilfuß bei Umgebungsdruck hergestellt wird, indem statt einer Schmelze ein Gießsystem auf der Basis von Polyurethanen eingesetzt wird. Das Gießsystem kann aus einer oder mehreren, insbesondere zwei Komponenten bestehen. Diese Herstellungsvariante ist preislich günstiger als das Schmelzeverfahren, jedoch sind die Zykluszeiten bei der Herstellung länger.

Die Ausgangsmaterialien für Gießsysteme sind im Wesentlichen die gleichen wie die oben bei den thermoplastischen Polyurethanen ausgeführten. Dabei kommen meist auch Polyole mit mehr als 2 Hydroxylgruppen zum Einsatz und/oder Vernetzer, wodurch vernetzte Polyurethane mit höherer mechanischer Festigkeit entstehen. Bevorzugte Vernetzer sind kurzkettige Glykole oder Diamine, die bevorzugt getrennt dosiert werden, insbesondere bei Heißgießsystemen. Weitere Hinweise zu Gießsystemen und entsprechende Herstellungsverfahren sind u.a. folgendem Standardwerk zu entnehmen: Polyurethane Handbook, Edited by Günter Oertel, 2nd Edition, Hanser Publisher, Munich, pp. 388 - 421.

Ein Gegenstand der Erfindung betrifft einen aufblasbaren Schlauchabschnitt, der aus einem thermoplastischen Polyurethan gefertigt ist und ein Loch aufweist, durch das Luft in den Schlauch gefördert werden kann. Um dieses Loch herum ist der Schlauchabschnitt haftend und vollumfänglich mit dem Ventilfuß eines erfindungsgemäßen Ventils verbunden, sodass der Innenraum des Schlauches dicht mit dem Innenraum des Schaftes verbunden ist. Geeignete Materialien zur Herstellung des Schlauchabschnittes sowie Verfahren zu seiner Herstellung wie Extrusion, Spritzguss oder Blasformen sind bekannt.

Im Rahmen der vorliegenden Erfindung kann das Material des Schlauchabschnitts die gleiche Zusammensetzung aufweisen wie das Material des Ventils. Ebenso ist es möglich, dass Schlauchabschnitt und Ventil eine unterschiedliche Zusammensetzung aufweisen oder aus unterschiedlichen Materialien bestehen.

Im Rahmen der vorliegenden Erfindung bestehen vorzugsweise der Schlauchabschnitt und das Ventil aus einem thermoplastischen Polyurethan, wobei üblicherweise die Härte der eingesetzten thermoplastischen Polyurethane bei Schlauchabschnitt und Ventil nicht gleich ist.

Eine dauerhafte Verbindung zwischen dem Ventilfuß und der Oberfläche des Schlauchabschnitts, die das Loch umgibt, kann auf unterschiedliche Weise hergestellt werden. Hierfür geeignet sind beispielsweise bekannte Klebstoffe, insbesondere Klebstoffe auf Polyurethan-Basis.

Bevorzugt wird das Ventil dadurch mit dem Schlauchabschnitt verbunden, dass die Unterseite des Ventilfußes mit einem Lösungsmittel benetzt und anschließend auf die Oberfläche des Schlauchabschnitts gedrückt wird. Dieses Verfahren, bei dem nach dem Aufpressen der angelösten Oberfläche des Ventilfußes auf die Schlauchoberfläche eine formschlüssige Verklebung erfolgt, wird auch als "Quellschweißen" bezeichnet. Besonders bevorzugt wird das Lösungsmittel ausgewählt aus der Gruppe der Ether, zyklischen Ether, Amine, Amide, Alkohole oder halogenierten Kohlenwasserstoffe. Insbesondere enthält das Lösungsmittel Methanol, Ethanol, iso-Propanol, Dimethylformamid, n-Methylpyrrolidon und/oder Tetrahydrofuran. Mischungen aus den genannten Substanzen sind ebenfalls bevorzugt.

Demgemäß betrifft die vorliegende Erfindung ein Verfahren zur Herstellung eines wie zuvor beschriebenen Schlauchabschnitts, dadurch gekennzeichnet, dass die Unterseite des Ventilfußes mit einem Lösungsmittel benetzt und anschließend auf die Oberfläche des Schlauchabschnitts gedrückt wird.

In einer weiteren bevorzugten Variante wird die Verbindung zwischen Ventilfuß und Schlauchabschnitt mittels eines Schweißverfahrens hergestellt. Insbesondere geeignet sind Verfahren des Thermoschweißens, Hochfrequenzschweißens oder des Ultraschallschweißens.

Demgemäß betrifft die vorliegende Erfindung ein Verfahren zur Herstellung eines wie zuvor beschriebenen Schlauchabschnitts, dadurch gekennzeichnet, dass der Ventilfuß mit dem Schlauchabschnitt mittels eines Schweißverfahrens, insbesondere mittels Thermoschweißen, Hochfrequenzschweißen oder Ultraschallschweißen, verbunden wird.

Im Rahmen der vorliegenden Erfindung kann dabei zunächst ein Loch in den Schlauchabschnitt eingebracht werden, das ein Aufpumpen des fertigen Schlauchs ermöglicht, und anschließend das Ventil bzw. der Ventilfuss bündig mit dem Loch aufgebracht werden. Es ist jedoch auch möglich, dass zunächst das Ventil mit dem Schlauchabschnitt verbunden wird und dann das Loch durch den Ventilschaft hindurch erzeugt wird.

Das Ventil sowie damit ausgerüstete Schlauchabschnitte sind einfach und kostengünstig herzustellen. Die Verbindungen zwischen Ventilschaft und Ventilfuß einerseits sowie zwischen Ventil und Schlauchabschnitt andererseits sind robust und sicher, sodass sich der Erfindungsgegenstand für eine breite Palette an Einsatzmöglichkeiten eignet.

Die Ventile bzw. aufblasbaren Schlauchabschnitte eignen sich für die Herstellung von Innenschläuchen, insbesondere für die Herstellung von Innenschläuchen für Fahrräder.

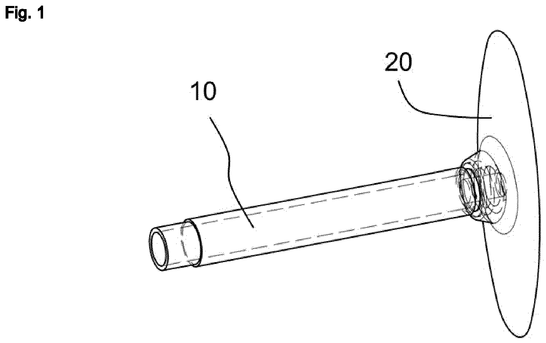

Im Folgenden wird die Erfindung anhand von Beispielen näher erläutert. Weder die Beispiele noch die als Prinzipdarstellung zu betrachtende Fig. 1 stellen eine Beschränkung der Erfindung, beispielsweise im Hinblick auf konkrete Abmessungen oder Ausgestaltungsvarianten von Bauteilen, dar. Fig. 1 zeigt schematisch ein erfindungsgemäßes Ventil, das einen Schaft 10 und einen Ventilfuß 20 umfasst.

### BEISPIELE

Für die Versuche wurden handelsübliche Ventilschäfte vom Sclaverand-Typ mit einer Gesamtlänge von 58 mm und einem Außendurchmesser von 6 mm verwendet. Der für die Befestigung des Ventilfußes vorgesehene Abschnitt des Schaftes wies auf eine Länge von ca. 4 mm einen größeren Durchmesser von 7 mm auf. Mittig in diesem Bereich war eine umlaufende Nut vorhanden, die etwas 0,5 mm tief und im Längsschnitt u-förmig abgerundet war.

### Vergleichsbeispiel

Ein Ventilschaft mit den oben beschriebenen Dimensionen aus Aluminium wurde in eine Spritzgussform eingelegt, die Form geschlossen, und der Ventilfuß durch Anspritzen eines thermoplastischen Polyurethans der Shore-Härte 80 A angespritzt (Elastollan 1180 A 10 der BASF Polyurethanes GmbH, Lemförde). Sobald die Schmelze fest geworden war, wurde das fertige Ventil aus der Form entnommen und 15 Stunden bei 80°C gelagert. Dadurch erhielt das Material seine endgültige Festigkeit. Bei dem auf diese Weise hergestellten Ventil konnte der Ventilfuß leicht von Hand vom Schaft abgezogen werden. Es war keine ausreichende Haftung vorhanden. Lediglich der Formschluss aufgrund der Nut gewährte eine gewisse Stabilität. Im Belastungsfall unter Druck, beispielsweise bei einem aufgepumpten Fahrradreifen, würde jedoch Luft unweigerlich austreten, da der Formschluss nicht abdichtet.

### Beispiel 1 (Vergleichsbeispiel)

Es wurde ein weiterer Ventilschaft wie im Vergleichsbeispiel beschrieben mit dem gleichen thermoplastischen Polyurethan unter den gleichen Prozessbedingungen verbunden. Der Schaft war aus Aluminium gefertigt und vollständig eloxiert. Bei diesem Ventil war die Haftung zwischen dem Ventilfuß und dem Schaft so groß, dass der Ventilfuß nicht vom Schaft abgezogen werden konnte, ohne ihn dabei zu zerstören. Die Verbindung zwischen Schaft und Ventilfuß war dauerhaft und luftdicht.

### Beispiel 2

Es wurde ein weiterer Ventilschaft wie in den beiden oben geschilderten Versuchen mit dem gleichen thermoplastischen Polyurethan unter den gleichen Prozessbedingungen verbunden. Der Schaft war aus einem thermoplastischen Polyurethan der Shore-Härte 75 D gefertigt. Er war ebenfalls 58 mm lang und wies einen Außendurchmesser von 6 mm auf. Im Gegensatz zu den beiden Aluminium-Schäften war sein zur Befestigung des Ventilfußes vorgesehener Abschnitt im Durchmesser nicht vergrößert. Im Abstand von 4 mm von seinem unteren Ende befand sich eine 1 mm breite und ca. 0,5 mm tiefe Nut, die im Längsschnitt rechteckig war. Wie auch im Fall des Beispiels 1 war eine sehr gute Haftung zwischen Ventilfuß und Schaft gegeben. Die Verbindung zwischen Schaft und Ventilfuß war dauerhaft und luftdicht.

In allen drei oben beschriebenen Fällen war der Ventilfuß oval gestaltet mit einer Ausdehnung über seine Längsachse von 40 mm und über seine Querachse von 18 mm. Sein Höhenprofil entsprach dem in Fig. 1 qualitativ dargestellten. Von den Rändern stieg seine Höhe zunächst langsam an, die Gesamthöhe am Schaft betrug 5 mm. Die Materialstärke des Ventilfußes in dem den Schaft bedeckenden Abschnitt betrug ca. 2 bis 0,5 mm, in axialer Richtung des Schaftes vom Fuß nach oben abnehmend.

### Beispiel 3 (Vergleichsbeispiel)

In einen kommerziell erhältlichen Fahrradschlauch aus thermoplastischem Polyurethan (Firma Eclipse Microsystems GmbH, Ebmatingen, Schweiz) wurde ein Loch in der Größe des Innendurchmessers des Ventils gestanzt. Ein erfindungsgemäßes Ventil gemäß Beispiel 1 wurde mit seinem Ventilfuß weniger als eine Sekunde in flüssiges Tetrahydrofuran als Lösungsmittel getaucht. Anschließend wurde das Ventil mittig auf das Loch im Fahrradschlauch gesetzt und von Hand angepresst. Nach einer Wartezeit von ca. 15 Sekunden war eine Haftung zwischen der Unterseite des Ventilfußes und der Schlauchoberfläche gegeben. Nach dem Ablüften bei Raumtemperatur für ca. 60 Sekunden, bei dem das Tetrahydrofuran ausdampfte, war die endgültige Haftung gegeben. Das Ventil war luftdicht und fest mit dem Schlauch verbunden.

## Patentansprüche

1. Aufblasbarer Schlauchabschnitt, der aus einem thermoplastischen Polyurethan gefertigt ist, wobei der Schlauchabschnitt ein Loch aufweist und um dieses Loch herum haftend und vollumfänglich mit dem Ventilfuß (20) eines Ventils verbunden ist,
wobei das Ventil einen rohrförmigen Schaft (10) sowie einen Ventilfuß (20) umfasst, der haftend und vollumfänglich mit einem Ende des Schaftes (10) verbunden ist,
wobei der Innenraum des Schlauches mit dem Innenraum des Schaftes (10) gegenüber der Umgebung abgedichtet verbunden ist,
**dadurch gekennzeichnet, dass** der Ventilfuß (20) aus einem thermoplastischen Polyurethan gefertigt ist,
dass der Schaft (10) des Ventils aus einem thermoplastischen Kunststoff gefertigt ist, und
dass der Schlauchabschnitt für die Herstellung von Innenschläuchen geeignet ist.

2. Aufblasbarer Schlauchabschnitt gemäß Anspruch 1, wobei der Schlauchabschnitt für die Herstellung von Innenschläuchen von Fahrrädern geeignet ist.

3. Aufblasbarer Schlauchabschnitt gemäß einem der Ansprüche 1 oder 2, wobei der Schlauchabschnitt ein geschlossener ringförmiger Schlauch oder ein an beiden Enden verschlossener Schlauchabschnitt ist.

4. Aufblasbarer Schlauchabschnitt gemäß Anspruch 1, wobei der Schlauchabschnitt ein geschlossener ringförmiger Schlauch oder ein an beiden Enden verschlossener Schlauchabschnitt ist und für die Herstellung von Innenschläuchen von Fahrrädern geeignet ist.

5. Aufblasbarer Schlauchabschnitt gemäß einem der Ansprüche 1 bis 4, wobei der Schaft des Ventils (10) aus einem thermoplastischen Polyurethan gefertigt ist.

6. Aufblasbarer Schlauchabschnitt gemäß einem der Ansprüche 1 bis 5, wobei das Material des Schlauchabschnitts die gleiche Zusammensetzung aufweist wie das Material des Ventils.

7. Aufblasbarer Schlauchabschnitt gemäß einem der Ansprüche 1 bis 6, wobei der Ventilfuß (20) den Schaft (10) in axialer Richtung mindestens 3 mm umschließt.

8. Aufblasbarer Schlauchabschnitt gemäß einem der Ansprüche 1 bis 7, wobei der Ventilfuß (20) am Ende des Schaftes (10) in jede radiale Richtung mindestens so weit über den äußeren Rand des Schaftes (10) hinaus ragt, wie es der Hälfte des Durchmessers des Schaftes (10) an seinem unteren Ende entspricht.

9. Verfahren zur Herstellung eines Schlauchabschnitts gemäß Anspruch 1, **dadurch gekennzeichnet, dass** die Unterseite des Ventilfußes (20) mit einem Lösungsmittel benetzt und anschließend auf die Oberfläche des Schlauchabschnitts gedrückt wird.

10. Verfahren gemäß Anspruch 9, wobei das Lösungsmittel ausgewählt ist aus der Gruppe der Ether, zyklischen Ether, Amine, Amide, Alkohole oder halogenierten Kohlenwasserstoffe.

11. Verfahren nach Anspruch 10, wobei das Lösungsmittel Methanol, Ethanol, Iso-Propanol, Dimethylformamid, N-Methylpyrrolidon und/oder Tetrahydrofuran enthält.

12. Verfahren zur Herstellung eines Schlauchabschnitts gemäß Anspruch 1, **dadurch gekennzeichnet, dass** der Ventilfuß (20) mit dem Schlauchabschnitt mittels eines Schweißverfahrens, insbesondere mittels Thermoschweißen, Hochfrequenzschweißen oder Ultraschallschweißen, verbunden wird.

## Claims

1. An inflatable flexible tube section manufactured from a thermoplastic polyurethane, where the flexible tube section has an aperture and has been connected adhesively around this aperture and around the entire periphery to the valve base (20) of a valve,
where the valve comprises a tubular shaft (10), and also a valve base (20), connected adhesively and around the entire periphery to an end of the shaft (10),
where the connection between the internal space of the flexible tube and the internal space of the shaft (10) has been sealed off from the environment,
wherein the valve base (20) has been manufactured from a thermoplastic polyurethane,
wherein the shaft (10) of the valve has been manufactured from a thermoplastic, and that the flexible tube section is suitable for the production of inner tubes.

2. The inflatable flexible tube section according to claim 1, where the flexible tube section is suitable for the production of inner tubes of bicycles.

3. The inflatable flexible tube section according to claim 1 or 2, where the flexible tube section is an endless annular flexible tube or a flexible tube section with two closed ends.

4. The inflatable flexible tube section according to claim 1, where the inflatable tube section is an endless annular flexible tube or a flexible tube section with two closed ends, and is suitable for the production of inner tubes of bicycles.

5. The inflatable flexible tube section according to any of claims 1 to 4, where the valve shaft (10) has been manufactured from a thermoplastic polyurethane.

6. The inflatable flexible tube section according to any of claims 1 to 5, where the composition of the material of the inflatable tube section is the same as that of the material of the valve.

7. The inflatable flexible tube section according to any of claims 1 to 6, where the valve base (20) encloses the shaft (10) in an axial direction to an extent of at least 3 mm.

8. The inflatable flexible tube section according to any of claims 1 to 7, where the extent to which the valve base (20) protrudes beyond the exterior edge of the shaft (10) in each radial direction at the end of the shaft (10) corresponds at least to half of the diameter of the shaft (10) at its lower end.

9. A process for producing a flexible tube section according to claim 1, which comprises wetting the underside of the valve base (20) with a solvent and then forcing the underside of the valve base onto the surface of the flexible tube section.

10. The process according to claim 9, where the solvent has been selected from the group of the ethers, cyclic ethers, amines, amides, alcohols, and halogenated hydrocarbons.

11. The process according to claim 10, where the solvent comprises methanol, ethanol, isopropanol, dimethylformamide, N-methylpyrrolidone, and/or tetrahydrofuran.

12. A process for producing a flexible tube section according to claim 1, which comprises connecting the valve base (20) to the flexible tube section by means of a welding process, in particular by means of thermal welding, high-frequency welding, or ultrasound welding.

## Revendications

1. Section de tube flexible pouvant être gonflée, fabriquée à partir d'un polyuréthane thermoplastique, la section de tube flexible présentant un trou et étant reliée autour de ce trou, de manière adhésive et sur toute la périphérie, au pied de valve (20) d'une valve,
la valve comprenant une tige (10) tubulaire ainsi qu'un pied de valve (20) qui est relié, de manière adhésive et sur toute la périphérie, à une extrémité de la tige (10), l'espace interne du tube flexible étant relié de manière étanche par rapport à l'environnement à l'espace interne de la tige (10),
**caractérisée en ce que** le pied de valve (20) est fabriqué à partir d'un polyuréthane thermoplastique,
**en ce que** la tige (10) de la valve est fabriquée à partir d'un matériau thermoplastique et
**en ce que** la section de tube flexible est appropriée pour la fabrication de chambres à air.

2. Section de tube flexible pouvant être gonflée selon la revendication 1, la section de tube flexible étant appropriée pour la fabrication de chambres à air de vélos.

3. Section de tube de flexible pouvant être gonflée selon l'une quelconque des revendications 1 ou 2, la section de tube flexible étant un tube flexible annulaire fermé ou une section de tube flexible fermée aux deux extrémités.

4. Section de tube flexible pouvant être gonflée selon la revendication 1, la section de tube flexible étant un tube flexible annulaire fermé ou une section de tube flexible fermée aux deux extrémités et étant appropriée pour la fabrication de chambres à air de vélos.

5. Section de tube flexible pouvant être gonflée selon l'une quelconque des revendications 1 à 4, la tige de la valve (10) étant fabriquée à partir d'un polyuréthane thermoplastique.

6. Section de tube flexible pouvant être gonflée selon l'une quelconque des revendications 1 à 5, le matériau de la section de tube flexible présentant la même composition que le matériau de la valve.

7. Section de tube flexible pouvant être gonflée selon l'une quelconque des revendications 1 à 6, le pied de valve (20) entourant la tige (10) sur au moins 3 mm dans la direction axiale.

8. Section de tube flexible pouvant être gonflée selon l'une quelconque des revendications 1 à 7, le pied de valve (20) dépassant en l'extrémité de la tige (10) dans chaque direction radiale au-delà du bord externe de la tige (10) au moins sur une distance qui correspond à la moitié du diamètre de la tige (10) en son extrémité inférieure.

9. Procédé pour la fabrication d'une section de tube flexible selon la revendication 1, **caractérisé en ce que** le côté inférieur du pied de valve (20) est mouillé par un solvant et ensuite pressé sur la surface de la section de tuyau flexible.

10. Procédé selon la revendication 9, le solvant étant choisi dans le groupe constitué par les éthers, les éthers cycliques, les amines, les amides, les alcools ou les hydrocarbures halogénés.

11. Procédé selon la revendication 10, le solvant contenant du méthanol, de l'éthanol, de l'isopropanol, du diméthylformamide, de la N-méthylpyrrolidone et/ou du tétrahydrofuranne.

12. Procédé pour la fabrication d'une section de tube flexible selon la revendication 1, **caractérisé en ce que** le pied de valve (20) est assemblé à la section de tube flexible au moyen d'un procédé de soudage, en particulier par thermosoudage, par soudage haute fréquence ou par soudage ultrasonore.
